# EUROPÄISCHE PATENTANMELDUNG

(11) **EP 1 355 040 A2**
(43) Veröffentlichungstag der Anmeldung: **22.10.2003**
(21) Anmeldenummer: 03006476.0
(22) Anmeldetag: 21.03.2003
(51) Int. Cl.: F01D 5/18

(54) **Luft- und dampfgekühlte Plattform einer Turbinenschaufel**

(30) Priorität: 18.04.2002 DE 10217388
(71) Anmelder: SIEMENS AKTIENGESELLSCHAFT, 80333 München (DE)
(72) Erfinder: Tiemann, Peter, 58452 Witten (DE)

(57) **Zusammenfassung**

Eine erfindungsgemäße Plattform (4) einer Turbinenschaufel (1) weist sowohl einen luftgekühlten Bereich (28) als auch einen dampfgekühlten Bereich (25) auf. Der dampfgekühlte Bereich (25) kann z.B. mit einem geschlossenen Kühldampfkreislauf gekühlt werden, während der luftgekühlte Bereich (28) z.B. mit einem offenen Kühlsystem gekühlt wird.

## Beschreibung

Die Erfindung geht aus von einer gekühlten Plattform einer Turbinenschaufel.

Aus der EP 1 126 134 A1 ist ein luft- und dampfgekühltes Schaufelblatt einer Turbinenschaufel bekannt.

Aus der US-PS 5,829,245 ist eine Plattform einer Turbinenschaufel bekannt, die entweder dampf- oder luftgekühlt wird.

Die komplette Kühlung einer Turbinenschaufel mit Schaufelblatt und Plattform bzw. dem Fussbereich mittels Dampfkühlung erfordert einen hohen konstruktiven Aufwand, so dass es zu einem Kostenproblem kommt.
Eine komplette Luftkühlung ist zwar möglich, führt aber zu einem höheren Druckluftverlust durch die Druckluft, die entnommen wird, um die Kühlluft bereit zu stellen.

Es ist daher Aufgabe der Erfindung, eine Plattform für eine Turbinenschaufel aufzuzeigen, die optimal gekühlt und kostengünstig herstellbar ist.

Die Erfindung geht von der Kenntnis aus, dass die Dampfkühlung für einfach zu kühlende Bereiche eingesetzt werden kann, wohingegen die Luftkühlung für schwerer zu kühlende Bereiche verwendet werden kann und darüber hinaus noch zu einer konvektiven Kühlung der Bohrungen und zu einer Filmkühlung führen kann.

Dabei ist es vorteilhaft, wenn die Dampfkühlung einen geschlossenen Kreislauf aufweist.

Da der kritischere zu kühlende Bereich im äußeren Bereich der Plattform liegt, wird der äußere Bereich vorteilhafterweise luftgekühlt, hingegen der innere Bereich dampfgekühlt.
Die erfindungsgemässe Plattform wird somit gleichzeitig luftund dampfgekühlt. Durch die Dampfkühlung wird Druckluft zur Kühlung eingespart.

Die Kühlwirkung kann sowohl im äusseren als auch im inneren Bereich sowie bei Luft- und Dampfkühlung dadurch verstärkt werden, dass eine Prallkühlung, insbesondere durch Prallkühleinsätze, durchgeführt wird.

Wenn ein einteiliger Prallkühleinsatz verwendet wird, reduziert sich die Anzahl der zu montierenden Teile.

Die Erfindung ist in der Zeichnung schematisch dargestellt.

Es zeigen:
Figur 1 schematisch einen Längsquerschnitt durch eine Plattform einer Turbinenschaufel und
Figur 2 eine Aufsicht auf eine Plattform der Turbinenschaufel.

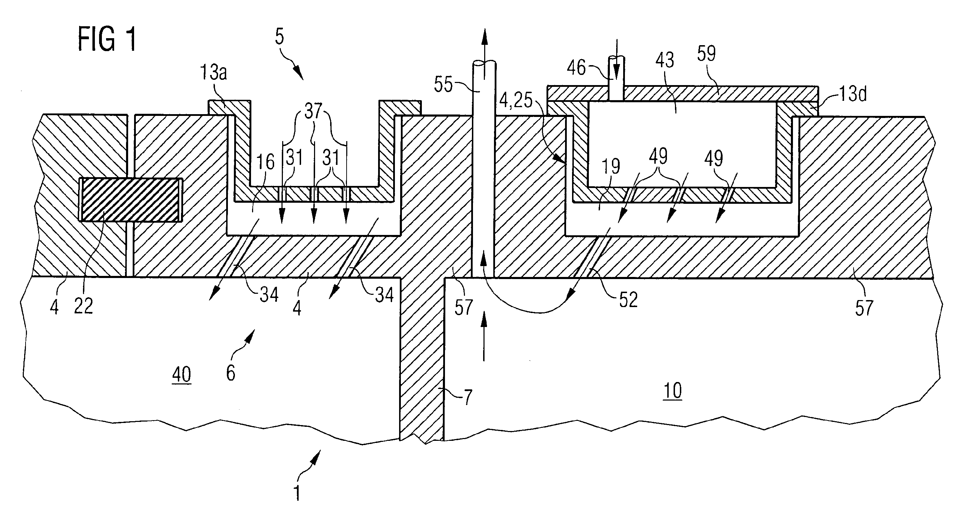

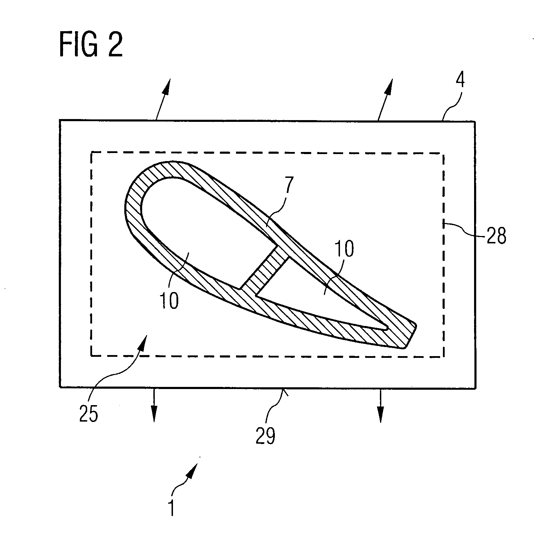

Figur 1 zeigt teilweise eine Turbinenschaufel 1, insbesondere eine Gasturbinenschaufel 1, mit einer bspw. rechteckigförmigen Plattform 4 (Fig. 2) im Längsquerschnitt (zur Zeichnungsebene senkrechter Schnitt in Fig. 2).
Die Turbinenschaufel 1 weist ein Schaufelblatt 7 mit einem Schaufelblatthohlraum 10 auf, in dem beispielsweise eine Luft- und Dampfkühlung des Schaufelblatts 7 stattfindet.

In einer Turbine sind mehrere Turbinenschaufeln 1 angeordnet, die beispielsweise durch ein Verbindungs-/Dichtungselement 22 im Bereich der Plattform 4 miteinander verbunden sind.

Die Plattform 4 weist einen äußeren Bereich 28 (Figur 2, gestrichelt angedeutet) auf, der entlang an einem äußeren Umfang 29 der Plattform 4 ausgebildet ist. Der äußere Bereich 28 der Plattform 4 umschließt einen inneren Bereich 25 der Plattform 4.
Der äussere Bereich 28 wird bspw. luftgekühlt. Die Luft wird bspw. der Druckluft der Turbine entnommen.

Im äußeren Bereich 28 ist bspw. zumindest ein Prallkühleinsatz 13a vorhanden, um die Kühlwirkung zu verstärken. Der Prallkühleinsatz 13a greift beispielsweise in eine Vertiefung der Plattform 4, d.h. in einen Luftkühlhohlraum 16 ein, wobei der Luftkühlhohlraum 16 an der dem Schaufelblatt 7 abgewandten Seite der Plattform 4, der Unterseite 5, angeordnet ist.

In dem Prallkühleinsatz 13a ist zumindest ein Prallluftdurchlass 31 vorhanden, durch den Luft in den Luftkühlhohlraum 16 einströmt. Die Richtung der Strömung ist durch Pfeile 37 angedeutet, wobei die Kühlluft von der Unterseite 5 der Plattform 4 in Richtung einer Aussenseite 6, die sich in einem Aussenbereich 40 befindet, strömt.
Durch den Prallkühleinsatz 13a findet eine Prallkühlung der Plattform 4 im äußeren Bereich 28 in einem Bereich der Aussenseite 6 statt, der thermisch belastet wird.

Ausgehend von dem Luftkühlhohlraum 16 ist bspw. zumindest ein Luftdurchlaß 34, insbesondere eine Filmkühlöffnung 34, in der Plattform 4 vorhanden, durch den die Kühlluft aus dem Luftkühlhohlraum 16 in den die Schaufel 1 umgebenden Außenbereich 40 strömt. Dabei ist bspw. der Luftdurchlaß 34 als Filmkühlbohrung ausgeführt, so dass eine Filmkühlung der Plattform 4 stattfindet. Die Luftkühlung bildet daher bspw. einen offenen System, da die Luft der Druckluft nicht zurückgeführt wird.

Der äussere Bereich 28 ist bspw. durch eine in der Plattform 4 an der Unterseite 5 bspw. ganz umlaufende Trennrippe 57 von dem inneren Bereich 25 getrennt.

Die Dampfkühlung findet in dem inneren Bereich 25 der Plattform 4 unterhalb des Schaufelblatthohlraums 10 der Turbinenschaufel 1 statt. Im inneren Bereich 25 ist beispielsweise ein Prallkühleinsatz 13d vorhanden, der in eine entsprechende Vertiefung 19, einen Dampfkühlhohlraum 19, der Plattform 4 eingreift. Durch eine Dampfeinströmöffnung 46 strömt Dampf aus einem Dampfkreislauf der Turbine in einen Dampfvorratsraum 43, um durch zumindest einen vorhandenen Pralldampfdurchlaß 49 in den Dampfkühlhohlraum 19 zu strömen. Dabei findet eine Prallkühlung der Plattform 4 im inneren Bereich 25 statt.
Aus dem Dampfkühlhohlraum 19 strömt der Dampf durch einen Dampfdurchlaß 52 in der Plattform 4 beispielsweise in den Schaufelblatthohlraum 10, um durch einen Dampfrückströmkanal 55 wieder in den Dampfkreislauf zurückzuströmen, so dass die Dampfkühlung einen geschlossenen Kreislauf bildet.
Andere Verbindungen zwischen Dampfkühlraum 19 und Dampfrückströmkanal 55 ohne Verbindung zum Schaufelblatthohlraum 10 sind ebenso denkbar.

Eine Abdeckung 59 bildet bspw. mit dem Prallkühleinsatz 13d den Dampfvorratsraum 43.

Der Prallkühleinsatz 13d des inneren Bereichs 25 und der Prallkühleinsatz 13a des äusseren Bereichs 28 können auch einteilig ausgeführt sein.

Auf der Trennrippe 57 liegen die Prallkühleinsätze 13a, 13d bspw. auf und sind dort befestigt, bspw. durch Verschweissen.

## Patentansprüche

1. Luft- und dampfgekühlte Plattform (4) einer Turbinenschaufel (1).

2. Plattform nach Anspruch 1,
**dadurch gekennzeichnet, dass**
die Luftkühlung einen offenen Kreislauf bildet.

3. Plattform nach Anspruch 1,
**dadurch gekennzeichnet, dass**
die Dampfkühlung einen geschlossenen Kreislauf bildet.

4. Plattform nach Anspruch 1 oder 2,
**dadurch gekennzeichnet, dass**
die Plattform (4) in einem äußeren Bereich (28) luftgekühlt ist.

5. Plattform nach Anspruch 1 oder 3,
**dadurch gekennzeichnet, dass**
ein innerer Bereich (25) der Plattform (4) dampfgekühlt ist.

6. Plattform nach Anspruch 4,
**dadurch gekennzeichnet, dass**
die Kühlung im äusseren Bereich (28) durch eine Prallkühlung realisiert ist.

7. Plattform nach Anspruch 5,
**dadurch gekennzeichnet, dass**
die Kühlung im inneren Bereich (25) durch eine Prallkühlung realisiert ist.

8. Plattform nach Anspruch 6 oder 7,
**dadurch gekennzeichnet, dass**
die Plattform (4) zumindest einen Prallkühleinsatz (13a, 13d) aufweist.

9. Plattform nach Anspruch 6,
**dadurch gekennzeichnet, dass**
der äussere Bereich (28) zumindest einen Prallkühleinsatz (13a) aufweist.

10. Plattform nach Anspruch 7,
**dadurch gekennzeichnet, dass**
der innere Bereich (25) zumindest einen Prallkühleinsatz (13d) aufweist.

11. Plattform nach Anspruch 1,
**dadurch gekennzeichnet, dass**
durch die Luftkühlung mittels zumindest einer Filmkühlbohrung (34) eine Filmkühlung der Plattform (4) realisiert ist.

12. Plattform nach Anspruch 9 und 10,
**dadurch gekennzeichnet, dass**
der Prallkühleinsatz (13d) des inneren Bereichs (25) und der Prallkühleinsatz (13a) des äusseren Bereichs (28) einteilig sind.
